(19) Europäisches Patentamt
European Patent Office
Office européen des brevets

(11) **EP 4 651 019 A1**

(12) **EUROPEAN PATENT APPLICATION**
published in accordance with Art. 153(4) EPC

(43) Date of publication:
**19.11.2025 Bulletin 2025/47**

(21) Application number: **24741102.8**

(22) Date of filing: **02.01.2024**

(51) International Patent Classification (IPC):
**G06K 17/00** (2006.01)

(52) Cooperative Patent Classification (CPC):
**G06K 17/00**

(86) International application number:
**PCT/CN2024/070032**

(87) International publication number:
**WO 2024/149103 (18.07.2024 Gazette 2024/29)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **09.01.2023 CN 202310038244**

(71) Applicant: Vivo Mobile Communication Co., Ltd.
**Dongguan, Guangdong 523863 (CN)**

(72) Inventors:
• LI, Dongru
  **Dongguan, Guangdong 523863 (CN)**
• YING, Zuolong
  **Dongguan, Guangdong 523863 (CN)**
• TAN, Junjie
  **Dongguan, Guangdong 523863 (CN)**
• WU, Kai
  **Dongguan, Guangdong 523863 (CN)**

(74) Representative: **Conti, Marco**
**Bugnion S.p.A.**
**Via di Corticella, 87**
**40128 Bologna (IT)**

(54) **INVENTORY PROCESSING METHOD AND APPARATUS, AND DEVICE**

(57) An inventory processing method and apparatus and a device are provided, and belong to the field of communication technologies. The method includes: A first device receives a first command, where the first command is used for inventory and obtaining code information of a target device (301); and the first device determines, according to the first command, whether to feed back code information of the first device (302).

Start

A first device receives a first command, where the first command is used for inventory and obtaining code information of a target device 301

The first device determines, according to the first command, whether to feed back code information of the first device 302

End

FIG. 3

EP 4 651 019 A1

**Description**

**CROSS-REFERENCE TO RELATED APPLICATIONS**

This application claims priority to Chinese Patent Application No. 202310038244.8 filed in China on January 9, 2023, which is incorporated herein by reference in its entirety.

**TECHNICAL FIELD**

This application relates to the field of communication technologies, and specifically, to an inventory processing method and apparatus, and a device.

**BACKGROUND**

In an existing radio frequency identification (Radio Frequency Identification, RFID) inventory process, a reader (Reader) usually can receive a backscatter signal of only one tag (Tag) at a moment. For example, when the Reader sends a control command to start the inventory process, a value Q is indicated. The Tag randomly selects a value q in locally generated values of {0, ..., 2^Q-1}. A Tag whose current random value is 0 may respond to the control command of the Reader and perform backscattering. However, a Tag whose current random value is not 0 does not perform backscattering, but waits for a next round of inventory, and backscattering cannot be performed until a condition that the random value is 0 is satisfied. Because of existence of the random factor, efficiency of responding to the query control command by Tags becomes low, consequently affecting subsequent inventory processes, and finally causing low communication efficiency.

**SUMMARY**

Embodiments of this application provide an inventory processing method and apparatus and a device, to resolve a problem of low inventory efficiency in backscatter communication.

According to a first aspect, an inventory processing method is provided, including:

a first device receives a first command, where the first command is used for inventory and obtaining code information of a target device; and
the first device determines, according to the first command, whether to feed back code information of the first device.

According to a second aspect, an inventory processing apparatus is provided, including:

a first receiving module, used for receiving a first command, where the first command is used for inventory and obtaining code information of a target device; and
a first processing module, used for determining, based on the first command, whether to feed back code information of the inventory processing apparatus.

According to a third aspect, an inventory processing method is provided, including:
a second device sends a first command, where the first command is used for inventory and obtaining code information of a target device.

According to a fourth aspect, an inventory processing apparatus is provided, including:
a first sending module, used for sending a first command, where the first command is used for inventory and obtaining code information of a target device.

According to a fifth aspect, an inventory processing method is provided, including:
a third device receives code information fed back by a target device, where the target device is a first device that receives a first command and confirms to feed back code information of the first device, and the first command is used for inventory and obtaining the code information of the target device.

According to a sixth aspect, an inventory processing apparatus is provided, including:
a second receiving module, used for receiving code information fed back by a target device, where the target device is a first device that receives a first command and confirms to feed back code information of the first device, and the first command is used for inventory and obtaining the code information of the target device.

According to a seventh aspect, a communication device is provided, including a processor and a memory. The memory stores a program or instructions runnable on the processor, and when the program or the instructions are executed by the processor, steps of the method according to the first aspect are implemented, or steps of the method according to the third aspect are implemented, or steps of the method according to the fifth aspect are implemented.

According to an eighth aspect, a communication device is provided, including a processor and a communication interface. The communication interface is used for receiving a first command, where the first command is used for inventory and obtaining code information of a target device. The processor is used for determining, based on the first command, whether to feed back code information of the communication device.

According to a ninth aspect, a communication device is provided, including a processor and a communication interface. The communication interface is used for sending a first command, where the first command is used for inventory and obtaining code information of a target device.

According to a tenth aspect, a communication device is provided, including a processor and a communication interface. The communication interface is used for receiving code information fed back by a target device, where the target device is a first device that receives a first command and confirms to feed back code information of the first device, and the first command is used for inventory and obtaining the code information of the target device.

According to an eleventh aspect, an inventory processing system is provided, including: a first device, a second device, and a third device, where the first device may be used for performing the steps of the inventory processing method according to the first aspect, the second device may be used for performing the steps of the inventory processing method according to the third aspect, and the third device may be used for performing the steps of the inventory processing method according to the fifth aspect.

According to a twelfth aspect, a readable storage medium is provided. The readable storage medium stores a program or instructions. When the program or the instructions are executed by a processor, steps of the method according to the first aspect are implemented, or steps of the method according to the third aspect are implemented, or steps of the method according to the fifth aspect are implemented.

According to a thirteenth aspect, a chip is provided. The chip includes a processor and a communication interface. The communication interface is coupled to the processor. The processor is used for running a program or instructions to implement the method according to the first aspect, or implement the method according to the third aspect, or implement the method according to the fifth aspect.

According to a fourteenth aspect, a computer program/program product is provided. The computer program/-program product is stored in a storage medium, and when the computer program/program product is executed by at least one processor, steps of the method according to the first aspect are implemented, or steps of the method according to the third aspect are implemented, or steps of the method according to the fifth aspect are implemented.

In embodiments of this application, a first command is used for both inventory and obtaining code information of a target device. Therefore, after receiving the first command, a first device can determine, according to the first command, whether the first device is the target device, to determine whether to feed back code information of the first device. In this way, based on the first command, a backscatter device is inventoried and the code information of the target device is obtained, to simplify a delay and complexity of an inventory process. This helps improve communication transmission efficiency.

## BRIEF DESCRIPTION OF THE DRAWINGS

FIG. 1 is a block diagram of a wireless communication system;
FIG. 2 is a schematic flowchart of a four-step inventory mode;
FIG. 3 is a schematic flowchart 1 of an inventory processing method according to an embodiment of this application;
FIG. 4 is a schematic diagram 1 of method application according to an embodiment of this application;
FIG. 5 is a schematic diagram 2 of method application according to an embodiment of this application;
FIG. 6 is a schematic flowchart 2 of an inventory processing method according to an embodiment of this application;
FIG. 7 is a schematic flowchart 3 of an inventory processing method according to an embodiment of this application;
FIG. 8 is a schematic diagram 1 of modules of an apparatus according to an embodiment of this application;
FIG. 9 is a schematic diagram 2 of modules of an apparatus according to an embodiment of this application;
FIG. 10 is a schematic diagram 3 of modules of an apparatus according to an embodiment of this application;
FIG. 11 is a schematic structural diagram of a communication device according to an embodiment of this application;
FIG. 12 is a schematic structural diagram of a terminal according to an embodiment of this application; and
FIG. 13 is a schematic structural diagram of a network-side device according to an embodiment of this application.

## DESCRIPTION OF EMBODIMENTS

The following clearly describes the technical solutions in embodiments of this application with reference to the accompanying drawings in embodiments of this application. It is clear that the described embodiments are a part rather than all of embodiments of this application. All other embodiments obtained by a person of ordinary skill in the art based on embodiments of this application shall fall within the protection scope of this application.

In the specification and claims of this application, the terms "first", "second", and the like are intended to distinguish between similar objects but do not necessarily indicate a specific order or sequence. It should be understood that the terms used in this way are exchangeable in a proper case, so that the embodiments of this application can be implemented in an order different from the order shown or described herein, and objects distinguished by "first" and "second" are usually of a same category and a quantity of the objects is not limited. For example, there may be one or more first objects. In addition, "or" in this specification and the claims represents at least one of connected objects. For example, "A or B" covers three solutions. To be specific, a solution 1 is including A and excluding B. A solution 2 is including B and excluding A. A solution 3 is including both A and B. The character "/" generally indicates an "or" relationship between the associated objects.

It should be noted that, the technology described in the embodiments of this application is not limited to a long term evolution (Long Term Evolution, LTE)/LTE-advanced (LTE-Advanced, LTE-A) system, but may be further used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access, (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually interchangeably used, and the technologies described may be applied to the systems and radio technologies mentioned above, and may also be applied to other systems and radio technologies. The following descriptions describe a new radio (New Radio, NR) system for illustration, and NR terms are used in most of the following descriptions, but these technologies can also be applied to applications other than NR system applications, such as a 6th generation (6th Generation, 6G) communication system.

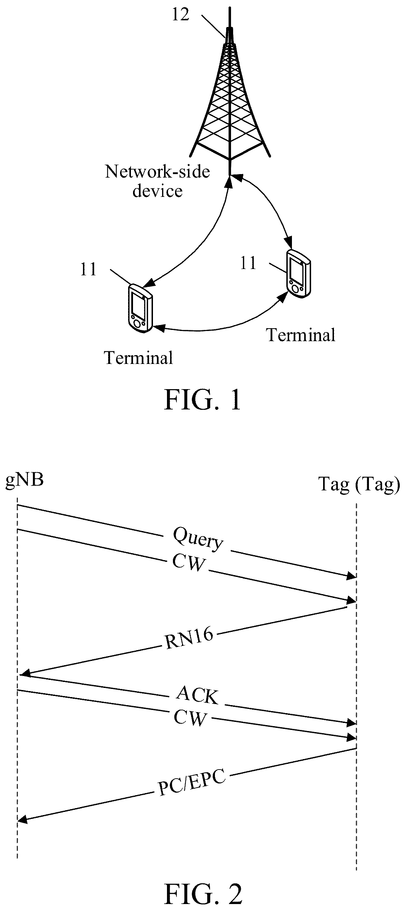

FIG. 1 is a block diagram of a radio communication system to which an embodiment of this application is applicable. The radio communication system includes a terminal 11 and a network-side device 12. The terminal 11 may be a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (Ultra-Mobile Personal Computer, UMPC), a mobile internet device (Mobile Internet Device, MID), an augmented reality (Augmented Reality, AR)/virtual reality (Virtual Reality, VR) device, a robot, a wearable device (Wearable Device), vehicle user equipment (Vehicle User Equipment, VUE), pedestrian user equipment (Pedestrian User Equipment, PUE), a smart home appliance (home devices with a wireless communication function, such as a refrigerator, a television, a washing machine, furniture, and the like), a game console, a personal computer (Personal Computer, PC), a teller machine, a self-service machine, or another terminal-side device. The wearable device includes: a smart watch, a smart band, a smart headset, smart glasses, smart jewelry (a smart bracelet, a smart hand chain, a smart ring, a smart necklace, a smart bangle, a smart anklet, and the like), a smart wrist strap, a smart dress, and the like. It should be noted that a specific type of the terminal 11 is not limited in embodiments of this application. The network-side device 12 may include an access network device or a core network device. The access network device may alternatively be referred to as a radio access network device, a radio access network (Radio Access Network, RAN), a radio access network function, or a radio access network unit. The access network device may include a base station, a wireless local area network (Wireless Local Area Network, WLAN) access point, a WI-FI node, and the like. The base station may be referred to as a Node B, an evolved Node B (Evolved Node B, eNB), an access point, a base transceiver station (Base Transceiver Station, BTS), a radio base station, a radio transceiver, a basic service set (Basic Service Set, BSS), an extended service set (Extended Service Set, ESS), a home Node B, a home evolved Node B, a transmission reception point (Transmission Reception Point, TRP) or some other suitable terms in the field. As long as the same technical effect is achieved, the base station is not limited to a specific technical word. It should be noted that, the base station in the NR system is used only as an example for description in the embodiments of this application, but a specific type of the base station is not limited.

To facilitate understanding, some content related to embodiments of this application are described below.

1. Backscatter communication (Backscatter Communication, BSC) or passive internet of things (passive Internet of Things, passive IoT) communication

Backscatter communication means that a backscatter communication device transmits its own information by performing signal modulation by using a radio frequency signal of another device or in an environment.

The backscatter communication device may be:

(1) a backscatter communication device in conventional radio frequency identification (Radio Frequency Identification, RFID), which is usually a tag (Tag), and is a passive IoT device (Passive-IoT);

(2) a semi-passive (semi-passive) Tag, where such a Tag has a specific amplification capability for downlink reception or uplink reflection; or

(3) a Tag (active Tag) with an active sending capability, where such a terminal may send information to a base station (gNB) or a reader (Reader) without relying on reflection of an incident signal.

A simple implementation is that in a case that the Tag needs to send "1", the tag reflects an incident carrier wave signal, and in a case that the Tag needs to send "0", no reflection is performed.

The backscatter communication device controls a reflection coefficient $\Gamma$ of a circuit by adjusting internal impedance of the backscatter communication device, to change an amplitude, a frequency, a phase, and the like of the incident signal, to implement signal modulation. The reflection coefficient of the signal may be represented by:

$$\Gamma = \frac{Z_1 - Z_0}{Z_1 + Z_0} = |\Gamma| e^{j\theta_T}$$

Herein, $Z_0$ is an antenna characteristic impedance and $Z_1$ is a load impedance. It is assumed that the incident signal is $S_{in}(t)$. In this case, an output signal is $S_{out}(t) = S_{in}(t)|\Gamma| e^{j\theta_T}$. Therefore, corresponding amplitude modulation, frequency modulation, or phase modulation can be implemented by reasonably controlling the reflection coefficient.

Optionally, in embodiments of this application, the tag device is the backscatter communication device.

Optionally, in embodiments of this application, first transmission may be related transmission in the backscatter communication.

In this embodiment, the backscatter communication includes transmission of the following content.

(1) Excitation carrier wave (Carrier Wave, CW) transmission, namely, transmission of a carrier wave signal: In an embodiment, the excitation carrier wave may be sent by a network-side device to a tag (Tag), or may be sent by a terminal to a tag.

(2) Transmission of a control command (command), for example, a select command, a query command, a repeat query command, an acknowledgment command, a read command, a write command, a random request command, or the like: In an embodiment, the control command may be sent by a network-side device to a tag (Tag), or may be sent by a terminal to a tag.

Optionally, the control command may include at least one of the following: a selection type command, a query type command, and an access command. The selection type command includes at least one of the following: a select command (a specific select command), an inventory command, or a sort command. The query type command includes at least one of the following: a query command (a specific query command), a query adjust command, or a repeat query command. The access command includes at least one of the following: a random request command, a read command, a write command, a kill command, a lock command, an access command, a security-related access command, or a file management-related access command.

The selection type (Select) command is necessary. Because a tag has a plurality of attributes, based on a standard and a policy set by a user, using the selection type command, a specific tag group is manually selected or delimited by changing some attributes and flags, and only inventory recognition or access operations may be performed on the specific tag group. This helps reduce conflicts and repeated recognition, and accelerate a recognition speed.

A command in an inventory stage is used to start a round of inventory. For example, the query command is used to start a round of inventory, and determine tags that participate in the round of inventory. The query adjust command is used for adjusting a quantity of original receiving moments (Slots) of the tag. The repeat query command is used for reducing a value of a tag Slot.

In the access (Access) command, the random request (Req_RN) command requires a tag to generate a random number. The read command is used for reading data from a location in storage of a tag. The write command is used for writing data into storage of a tag. The kill command may prevent leakage of privacy, and a tag cannot be used anymore. The lock command is used for preventing the tag from performing a write action, to prevent data from being arbitrarily altered. The access command is used for switching a tag from an open (Open) state to a secure (Secure) state when the tag has a password. The security-related access command is used for ensuring security of a tag. The file management-related access command may be used for managing a file in a tag.

(3) Transmission of feedback information: which may also be understood as transmission of backscatter information in backscatter communication, including, for example, Tag identification information (such as a 16-bit random number that temporarily represents a Tag identity during a query process, electronic product code information, and Tag state information). In an embodiment, the backscatter channel or signal may be sent by the tag to the terminal through backscattering, or may be sent by the tag to the network-side device through backscattering.

2. Control command

Control transmission includes at least one of the following operations, and each operation includes one or more related control commands:

a. Select (Select) operation

The select operation is a process in which a reader selects a tag group for subsequent inventory or encrypts the tag group for subsequent authentication. The selection includes a select command.

b. Inventory (Inventory) operation

The inventory operation is a process in which the reader identifies a tag. The reader starts an inventory cycle by sending a query command in one of four sessions. One or more tags may reply. The reader detects a single tag reply and requests protocol control (Protocol Control, PC), an optional extended protocol control (Extended Protocol Control, XPC) word, electronic product code (Electronic Product Code, EPC), and cyclic redundancy check-16 (Cyclic Redundancy Check-16, CRC-16) from the tag. The inventory includes a plurality of commands. A very important command is a challenge command. For details, refer to Table 2.

c. Access (Access) operation

The access operation is a process in which the reader transacts (reads, writes, authenticates, or otherwise participates) with a single tag. Before the access, the reader separately recognizes the tag, and the access includes a plurality of commands.

Operation instructions of the reader (Reader) are shown in Table 1, and operation types are shown in Table 2.

Table 1

| | |
|---|---|
| Inventory period | A period started by a query command and terminated by a subsequent query command (a new round of inventory process is started at the same time), a select command, or a challenge command. |
| Q | A parameter used by the reader to adjust a response probability of the tag, where the reader indicates tags in an inventory round to load a Q-bit random (or pseudo-random) number into Q counters of the tags; the reader may further command the tags to reduce the Q counters of the tags; a tag replies when a value (namely, Q of the tag) of a Q counter of the tag is zero; Q is an integer in a range of $(0,15)$; and a corresponding response probability of the tag ranges from $2^0 = 1$ to $2^{-15} = 0.000031$. <br><br> It may be understood that a value of Q is used for controlling a tag population in a round of inventory. |
| Slot | The Slot corresponds to a point to which the tag may respond in a round of inventory. The Slot is a value output by the Slot counter of the tag. The tag replies when the Slot (namely, a value in the Slot counter) of the tag is zero. Refer to Q. <br> The Slot refers to a value randomly selected by the tag from 0 to $(2^Q - 1)$ based on the value of Q. Only a tag that selects a specific Slot value, for example, Slot=0, can receive a next command. |

Specifically, the control command may include instructions shown in Table 2 (which is a comparison table between a control command and function descriptions).

Table 2

| Operation type | Instruction | Function |
|---|---|---|
| Selection operation | Select (Select) | Select a tag; and allow an interrogator to select tag filling for subsequent inventory. |
| | Challenge (Challenge) | The challenge allows the interrogator to challenge tag filling for subsequent identity authentication. |

(continued)

| Operation type | Instruction | Function |
|---|---|---|
| Inventory (Inventory) operation | Query (Query) | Start a round of inventory.<br>Query and start a round of inventory, and determine tags that participate in the round of inventory.<br>The query includes one slot count parameter Q. When a query participation tag is received, a random value in a range (0, 2Q-1) is selected, and the value is loaded to a slot counter of the tag.<br>Select a tag that transitions from zero to a reply state and immediately makes a reply. Select a tag that transitions from a non-zero value to an arbitrate state and waits for a QueryAdjust or QueryRep command. |
| | Query adjust (Query Adjust) | Adjust a quantity of original slots of the tag. |
| | Repeat query (QueryRep) | The tag reduces the quantity of slots of the tag. |
| | EPC acknowledge (Acknowledge, ACK) | The reader responds to an instruction to a tag, and the tag feeds back RN16. |
| | Negative-acknowledgment (Negative-Acknowledgment, NAK) | Instruction sent by a reader.<br>A tag returns to an arbitrate (Arbitrate) state.<br>At any time, an interrogator may send a NAK as a response, and all tags in this round of inventory that receive the NAK return to the arbitrate state without changing their inventory flags. |
| Access | Random request (Req_RN) | Require the tag to generate a random number. |
| | Read (Read) | Read data from a location in storage of a tag. |
| | Write (Write) | Write data into storage of a tag. |
| | Kill (Kill) | No response is made to any reader anymore.<br>Prevent privacy leakage.<br>The tag is no longer available. |
| | Lock (Lock) | The tag can no longer perform a writing action.<br>Prevent data from being arbitrarily changed. |
| | Access (Access) (optional) | Switch a tag from an open (Open) state to a secure (Secure) state when the tag has a password. |
| | Block write (Block Write) (optional) | Write into a plurality of blocks at a time. |
| | Block erase (BlockErase) (optional) | Clear a plurality of blocks in storage of a single tag. |
| | Authenticate (Authenticate), secure communication (SecureComm), AuthComm, key update (KeyUpdate), and tag privilege (TagPrivilege) | Security-related access command.<br>The Authenticate command may implement a tag, an interrogator, and/or mutual authentication, depending on implementation of a cipher suite specified by a CSI in the command by the tag.<br>The authcomm command allows authenticated R-to-T communication.<br>The SecureComm command allows secure R-to-T communication.<br>The KeyUpdate command allows an authenticated interrogator to write or change a key.<br>The TagPrivilege command allows the interrogator to read or modify a privilege to access a password or a key. |

(continued)

| Operation type | Instruction | Function |
|---|---|---|
| | File open (FileOpen), file list (FileList), file privilege (FilePrivilege), and file setup (FileSetup) | Access-related command for file management.<br>The file-management access commands are FileOpen, FileList, FileSetup, and FilePrivilege.<br>The FileOpen command allows an interrogator to open a file.<br>The file list command allows the interrogator to determine presence, sizes, attributes, and privileges of one or more files.<br>The FileSetup command allows the interrogator to change a file type of a currently opened file and/or adjust a size of the currently opened file.<br>The FilePrivilege command allows the interrogator to read or change a privilege (see below) granted to the currently opened file to an open state, and access a password or a key. |
| | Req_RN, Read, Write, Lock, Kill, Access, BlockWrite, BlockErase, BlockPermalock, and untraceable (Untraceable) | Core access commands.<br>The core access commands include Req_RN, Read, Write, Lock, Kill, access, BlockWrite, BlockErase, BlockPermalock, and UNTRACKABLE. Req_RN, Read, Write, Lock, and Kill are necessary. Access, BlockWrite, BlockErase, BlockPermalock, and Untraceable are optional. A tag may implement one or more optional commands, regardless of whether the tag supports encryption security or file management.<br>The Write, BlockWrite, and BlockErase commands allow the interrogator to write or erase a part of storage of a tag.<br>The Lock and BlockPermalock commands allow the interrogator to configure a part of the storage of the tag to be changeable, permanently writable, or non-writable.<br>The Untraceable command allows an interrogator with an asserted untraceable permission. |

States of the tag (Tag) are shown in Table 3.

Table 3

| State of the tag | Description |
|---|---|
| Ready (Ready) | Not in a currently performed inventory operation. |
| Arbitrate (Arbitrate) | The tag is currently in an inventory operation.<br>A number representing Slot is not zero, and this indicates a waiting state. |
| Reply (Reply) | Generate a 16-bit random number for the reader.<br>State of responding when an ACK message is received.<br>Return to an arbitrate state when no ACK message is received. |
| Acknowledge (Acknowledge) | From this state to any state other than a killed state. |
| Open (Open) | When a tag whose password is not zero in an acknowledged state receives an instruction of a random request, the tag enters an open state. |
| Secure (Secure) | When a tag whose password is zero in an acknowledged state receives an instruction of a random request sent by the reader, the tag enters a secure state. |
| Killed (Killed) | Permanently unavailable. |

In a current protocol design of ultra high frequency radio frequency identification (Ultra High Frequency Radio Frequency Identification, UHF RFID), in an inventory mode, the tag (Tag) is required to respond and reply (Reply) after the reader sends a query (Query) instruction, that is, generates a 16-bit random number to the reader. Then, the reader sends the sequence to the Tag through an ACK instruction, and the Tag sends related data to the reader.

Specifically, a process of obtaining code information (PC or EPC) of a Tag is shown in FIG. 2.

A base station (gNB) sends a control command (for example, Query) and a CW to the Tag. After receiving the Query, the Tag feeds back the RN16 to the gNB. After receiving the RN16, the gNB further sends an ACK and the CW to the Tag. The Tag reports the PC or the EPC in response to the ACK.

3. Backscatter communication application scenario

The backscatter communication application scenario includes:

(1) a network-side device sends a CW and signaling, and receives a reflection signal of a Tag;
(2) a terminal sends a CW and signaling, and receives a reflection signal of a Tag;
(3) a network-side device sends a CW and signaling to a Tag, and a terminal receives backscatter information sent by the Tag; and
(4) a terminal sends a CW and signaling to a Tag; and a network-side device receives backscatter information from the Tag.

In this embodiment, a type of the network-side device, for example, the base station, includes but is not limited to: Types of the base station include an integrated access and backhaul (Integrated Access and Backhaul, IAB) node, and a repeater (repeater) like a network controlled repeater (network controlled repeater) and a pole station (pole station).

4. Competitive communication process of a backscatter communication system

In an existing backscatter communication system, the Reader can usually receive a backscatter signal of only one Tag at a moment. For example, in an RFID inventory process, when the Reader sends a control command (for example, query) to start the inventory process, a value Q is indicated. The Tag randomly selects a value q in locally generated values of $\{0, ..., 2^Q-1\}$. A Tag whose current random value is 0 transmits a backscatter signal in response to the control command of the Reader. A Tag whose current random value is not 0 temporarily does not transmit the backscatter signal. After completing communication with the Tag whose random value is 0, the Reader may continue to send a control command (for example, queryRep), for example, indicating the Tag to subtract 1 from the generated random number, and the Tag whose random value is reduced to 0 performs backscatter transmission in response to the control command.

An inventory processing method and apparatus, and a device that are provided in embodiments of this application are described in detail below with reference to the accompanying drawings through some embodiments and application scenarios thereof.

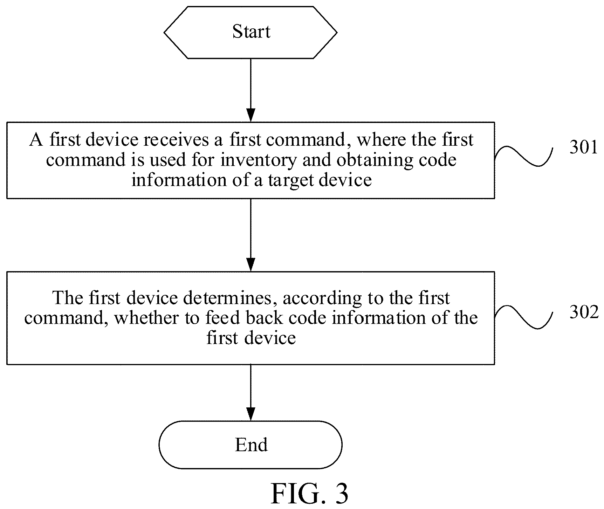

As shown in FIG. 3, an inventory processing method according to an embodiment of this application includes the following steps.

Step 301: A first device receives a first command, where the first command is used for inventory and obtaining code information of a target device.

Herein, a function of the first command includes two types. To be specific, on one hand, the function is used for inventory, and on the other hand, the function is used for obtaining the code information of the target device.

Step 302: The first device determines, according to the first command, whether to feed back code information of the first device.

In this step, the first device determines, according to the first command received in step 301, whether to feed back the code information of the first device. The determining whether to feed back the code information of the first device may also be understood as determining whether the first device is the target device.

In this way, according to the foregoing steps, the first command is used for both inventory and obtaining the code information of the target device. Therefore, after receiving the first command, a first device can determine, according to the first command, whether the first device is the target device, to determine whether to feed back code information of the first device. In this way, based on the first command, a backscatter device is inventoried and the code information of the target device is obtained, to simplify a delay and complexity of an inventory process. This helps improve communication transmission efficiency.

In an embodiment, the first device is a tag (Tag) device. The code information includes: protocol control (Protocol Control, PC), electronic product code (Electronic Product Code, EPC), and the like.

Optionally, the first device receives the first command sent by a second device, or receives the first command that is sent by the second device and forwarded by a third device. Herein, the second device (Reader) is a network-side device or a terminal device, and the third device (namely, a relay device) is a network-side device, a terminal, an IAB device, or the like.

Optionally, in this embodiment, after determining to feed back the code information of the first device, the first device feeds back the code information of the first device, and further feeds back the code information of the first device to the second device or the third device.

Optionally, in this embodiment, the first command indicates at least one of the following:

identity information of the target device; and
inventory-related indication information.

In an embodiment, the first command indicates the identity information of the target device. The identity information may be 16-bit identity information (RN16) of the target device.

In an embodiment, the inventory-related information includes: indication information included in at least one of a select command, a query command, or a repeated query command. For example, the inventory-related information further includes an indication of a value of Q. For another example, the inventory-related indication information is used for determining which first devices participate in this round of inventory.

Optionally, in this embodiment, before the first device receives the first command, the method further includes:

the first device receives a second command, where the second command indicates an inventory mode, where the inventory mode includes a two-step inventory mode and a four-step inventory mode.

Herein, the four-step inventory mode includes: (1) The first device receives a challenge-related command; (2) the RN16 is fed back in a case that a slot counter of the first device is equal to a first value (for example, 0); (3) the first device receives a code obtaining command (for example, an ACK); and (4) the first device feeds back the code information (for example, PC or EPC), for example, steps 1 to 4 shown in FIG. 2.

The two-step inventory mode includes: (1) The first device receives the first command; (2) in a case that the first device is the target device, the first device feeds back the code information of the first device.

In an implementation, the second command may be a select command or an inventory command.

Optionally, in this embodiment, that the first device receives the first command includes:
the first device receives the first command in a case that the second command indicates that the inventory mode is the two-step inventory mode.

To be specific, before sending the first command, an initiating device (namely, the second device) of the first command may send the second command indicating the two-step inventory mode. In this case, the first device needs to receive the first command in a case that the second command is received and the second command indicates the two-step inventory mode, to perform subsequent processing. Certainly, if the second command received by the first device indicates the four-step inventory mode, the first device performs processing in the process shown in FIG. 2. Details are not described herein again.

In addition, if it is agreed in advance that the initiating device of the first command does not need to send the second command before the first command is sent, the first device performs the two-step inventory process by default.

Optionally, in this embodiment, that the first device determines, according to the first command, whether to feed back code information of the first device includes:

the first device determines, in a case that the first command includes the identity information of the target device, whether identity information of the first device matches the identity information of the target device; and
the first device feeds back the code information of the first device in a case that the identity information of the first device matches the identity information of the target device.

In this way, after receiving the first command, the first device can determine, according to the first command, whether to feed back the code information of the first device, that is, whether the first device is the target device, to ensure that only the target device corresponding to the first command feeds back the code information, thereby avoiding that a plurality of first devices feeds back code information at the same time.

In other words, the first device determines, for the identity information of the target device of the first command, whether to feed back the code information of the first device based on whether the identity information of the first device matches the identity information of the target device. Specifically, the first device feeds back the code information of the first device in a case that the identity information of the first device matches the identity information of the target device.

Certainly, the first command includes the identity information of the target device, which indicates that the code information of the target device is obtained. In this case, if the first device is the target device, a value of the slot counter of the first device may be ignored, that is, the value of the slot counter of the first device is not limited.

Optionally, in this embodiment, that the first device determines, in a case that the first command includes the identity information of the target device, whether identity information of the first device matches the identity information of the target device includes:
the first device ignores the inventory-related indication information, and determines whether the identity information of the first device matches the identity information of the target device.

In other words, in a case that the first device receives the first command, and the first command includes the identity information of the target device, if the first device is determined as the target device, the first device is not limited by the inventory-related indication information. The first device may be a first device that is confirmed by the inventory-related indication to participate in the inventory, or may not be a first device that participates in this round of inventory.

In another embodiment, in a case that the identity information of the first device matches the identity information of the target device, the first device also needs to follow the indication of the inventory-related indication information in the first command.

Optionally, the target device is a first device that is determined by the first command to participate in the inventory.

Optionally, in this embodiment, the method further includes:

in a case that the identity information of the first device does not match the identity information of the target device, at least one of the following is performed:

the first device does not feed back the code information of the first device;
a slot counter of the first device is not decreased; and
the slot counter of the first device is reset.

In other words, for the identity information of the target device in the first command, the first device determines whether the identity information of the first device matches the identity information of the target device, and in the case that the identity information of the first device does not match the identity information of the target device, at least one of the following is performed: The first device does not feed back the code information of the first device; the slot counter of the first device is not decreased; and the slot counter of the first device is reset.

For example, the first device receives the first command, and the slot counter of the first device satisfies being equal to 0. However, as long as the identity information of the first device does not match the identity information of the target device in the first command, the first device still cannot feed back the code information of the first device.

For example, in a case that the identity information of the first device does not match the identity information of the target device, the slot counter of the first device is not decreased. That is, in a case that the first command indicates the identity information of the target device, only the target device feeds back the code information, and another first device that is not the target device but participates in this round of inventory does not decrease a slot counter thereof. This is equivalent to that the target device specified in the first command is inventoried in this round, rather than another first device that participates in the inventory, and a state and a timer of the another first device that participates in the inventory do not need to change (that is, maintain an existing state).

Resetting of the slot counter refers to regenerating a random number based on the value of Q and loading the random number into the slot counter.

Optionally, in this embodiment, the first device maintains a current state or changes to an arbitrate (arbitrate) state in the case that the identity information of the first device does not match the identity information of the target device.

Herein, in the case that the identity information of the first device does not match the identity information of the target device, a current state of the first device is a reply state or an arbitrate state.

Optionally, that the first device determines, according to the first command, whether to feed back code information of the first device includes:

the first device feeds back the code information of the first device in a case that the first command does not include the identity information of the target device and a slot counter of the first device is equal to a first value.

Herein, the first value may be agreed on in advance, or may be indicated by the first command (for example, carried in the inventory-related indication information). In a case that the first command does not include the identity information of the target device, based on the value of the slot counter of the first device, the first device may feed back the code information of the first device when (a value of) the slot counter is equal to the first value.

It may be understood that, in this embodiment, the target device is a first device that receives the first command and confirms to feed back code information of the first device. Specifically, there are two possibilities of the target device: (1) In a case that the first command indicates the identity information of the target device, the target device is specified by the first command. (2) In a case that the first command does not indicate the identity information of the target device, the target device is a first device whose slot counter is equal to the first value. Optionally, the first device is determined by the first command to participate in this round of inventory.

Optionally, the method further includes:
the first device switches to an acknowledged (acknowledged) state.

In other words, in a case that it is determined that the first device feeds back the code information, the first device switches to the acknowledged state.

Optionally, in this embodiment, the first device further determines or decreases a value of the slot counter of the first device according to the first command. For example, the first device is not the target device, and the first device can still perform at least one of the following operations based on the inventory-related indication information: determining whether to participate in this round of inventory and determine whether to decrease the value of the slot counter of the first device.

Optionally, the feedback information triggered by the first command and received by the first device is code information, for example, PC or EPC. In an embodiment, the feedback information triggered by the first command and received by the first device is not RN16.

Optionally, in this embodiment, that the first device feeds back the code information of the first device includes: the first device feeds back the code information of the first device based on reception of a continuous wave.

It is worthwhile to note that, the second device sends the continuous wave (Continuous Wave) within the specific time interval since sending the first command, so that the first device feeds back the code information. The first device feeds back the code information of the first device based on reception of the continuous wave.

In addition, it is considered that because a length of the code information fed back by the first device is not fixed, the second device cannot determine specific duration for sending the continuous wave to the first device for feedback.

In an implementation, on one hand, the second device sends, based on a second value, the continuous wave to the first device for feedback, where the second value is a duration value determined based on a longest length of the code information. Further, the second device stops sending the continuous wave in a case that the second device cannot detect the feedback information. On the other hand, after receiving a terminator or a termination sequence of the first device, the second device stops sending the continuous wave, thereby adaptively sending a variable-length continuous wave and avoiding unnecessary resource and energy consumption. The first device may additionally send the terminator or the termination sequence after completely sending the code information. The terminator or the termination sequence may be predefined, or may be configured by the second device.

Optionally, in this embodiment, in a case that the second device does not successfully receive (including unsuccessful receiving and receiving but unsuccessful decoding) the code information of the target device, the second device sends at least one of the second command and the third command that indicate the four-step inventory mode.

The following describes specific application of the method in embodiments of this application.

Example 1:

Step 1: The first device (for example, a tag device) receives the first command.

Step 2: The tag device determines, based on the received first command, whether to feed back code information of the tag device. In a case that it is determined to perform a feedback, the code information such as PC or EPC of the tag device is fed back. In a case that it is determined not to perform a feedback, the code information is not fed back.

Example 2:

Step 0: The first device (for example, a tag device) receives the second command.

Step 1: The tag device receives the first command in a case that the second command indicates that the inventory mode is the two-step inventory mode.

Step 2: The tag device determines, based on the received first command, whether to feed back code information of the tag device. In a case that it is determined to perform a feedback, the code information such as PC or EPC of the tag device is fed back. In a case that it is determined not to perform a feedback, the code information is not fed back.

In the foregoing examples, a case that it is determined to perform the feedback includes any one of the following:

(1) the identity information of the tag device matches the identity information of the target device indicated by the first command (for example, the RN16 of the tag device is consistent with the RN16 corresponding to the target device in the first command); and

(2) the first command does not include the identity information of the target device, and the value of the slot counter of the tag device is equal to the first value (for example, the first value is 0).

In the foregoing examples, a case that it is determined not to perform the feedback includes any one of the following:

(1) the identity information of the tag device does not match the identity information of the target device in the first command; and

(2) the first command does not include the identity information of the target device, and the value of the slot counter of the tag device is not equal to the first value (for example, the first value is 0).

It is worthwhile to note that, even if the value of the slot counter of the tag device is equal to the first value when the first command is received, the tag device still cannot feed back the code information of the tag device provided that the identity information of the tag device does not match the identity information of the target device indicated by the first command.

In addition, the case that the tag device determines not to perform the feedback includes at least one of not feeding back the code information, not decreasing the slot counter, or resetting the slot counter.

In addition, in this embodiment, in a case that the identity of the first device does not match the identity information of the target tag in the first command, or the first command does not include the identity of the target tag but the value of the slot counter of the first device is not equal to the first value, the first device can still determine, based on the inventory-related indication information indicated by the first command, whether to participate in this round of inventory. If it is determined to participate in this round of inventory, the first device can feed back the code information when the value of the slot counter is decreased to the first value.

For example, in Example 2, in the case that the tag device determines not to perform the feedback, the tag device can still determine, based on the inventory-related indication information indicated by the first command, whether to participate in this round of inventory.

Optionally, in a case that the tag device determines, based on the inventory-related indication information, to participate in this round of inventory, and the value of the slot counter of the tag device is equal to the first value, the tag device still does not feed back the identity information of the tag device (for example, the RN16). In other words, the Tag feedback information of the first command can only be code information.

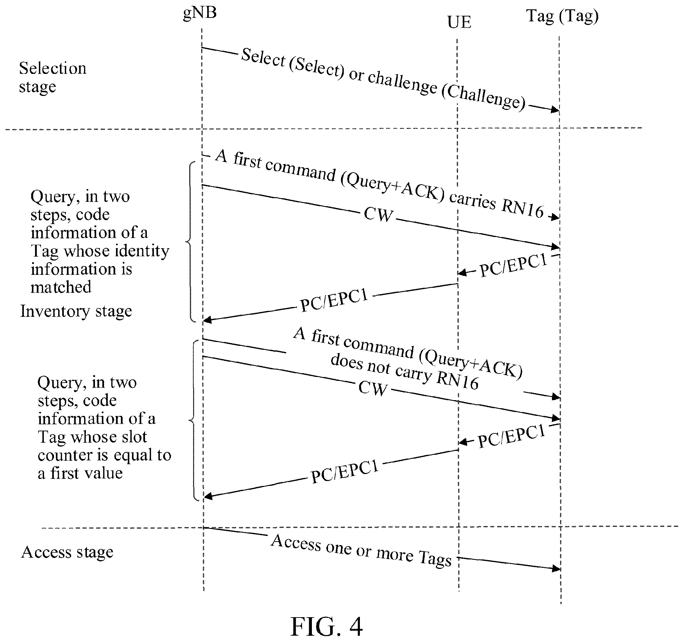

In this embodiment, if communication between the first device and the second device is relayed through a third device, the method in embodiments of this application is applied. For example, as shown in FIG. 4, the first device corresponds to a Tag, the second device corresponds to a network-side device gNB, and the third device corresponds to a terminal UE. The first command is Query (inventory-related indication information) + ACK (identity information of the target device). If the ACK carries the RN16 (16-bit identity information of the target device), it may be understood as indicating the target device, that is, triggering the target device to feed back the code information (for example, PC/EPC1). If the ACK does not carry the RN16, the target device is a first device whose slot counter has a value equal to the first value (the first value is 0, that is, Slot=0), and the first device feeds back the PC/EPC1. Herein, the first command sent by the gNB is forwarded to the Tag through the UE. The Tag determines to feed back the code information of the Tag, and the code information fed back by the Tag is forwarded to the gNB through the UE.

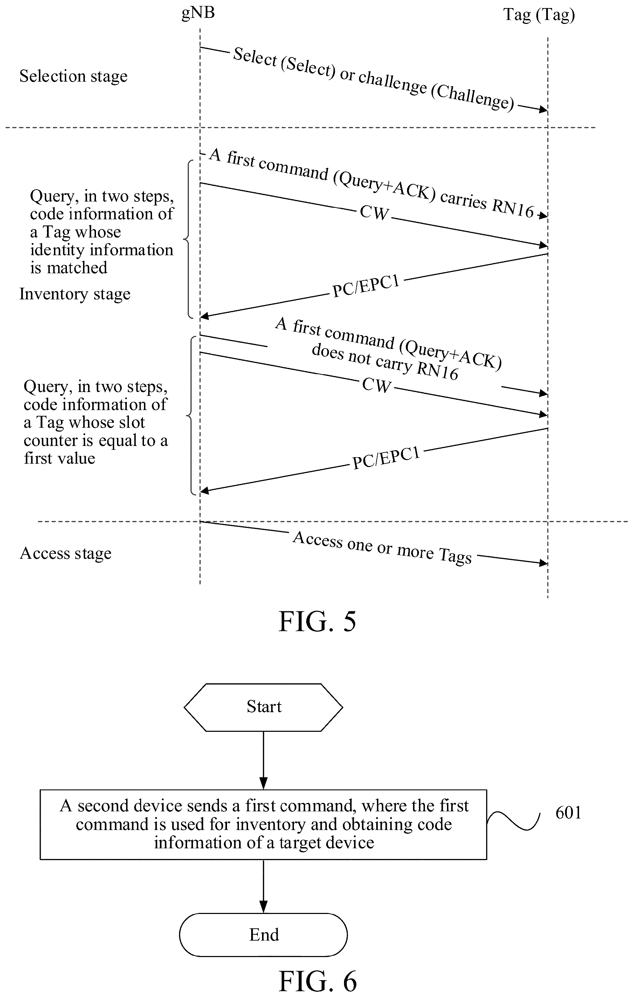

In this embodiment, if the first device directly communicates with the second device, the method in embodiments of this application is applied. For example, as shown in FIG. 5, the first device corresponds to a Tag, and the second device corresponds to a network-side device gNB. Similarly, the first command is Query (inventory-related indication information) + ACK (identity information of the target device). If the ACK carries the RN16 (16-bit identity information of the target device), it may be understood as indicating the target device, that is, triggering the target device to feed back the code information (for example, PC/EPC1). If the ACK does not carry the RN16, the target device is a first device whose slot counter has a value equal to the first value (the first value is 0, that is, Slot=0), and the first device feeds back the PC/EPC1. Herein, the gNB directly sends the first command to the Tag. The Tag determines to feed back the code information of the Tag, and the Tag directly feeds back the code information to the gNB.

Optionally, in this embodiment, a format of the feedback (Tag reply) of the first device triggered by the first command is the same as a format of the Tag reply triggered by the code obtaining command (ACK) in the four-step inventory process, and details are not described herein again.

In conclusion, according to the inventory processing method in embodiments of this application, the code information of the target device can be queried for in two steps by using the first command. The target device may be a first device corresponding to the identity information indicated by the first command, or may be a first device whose slot counter has a value equal to a first value when the first command does not indicate the identity information of the device. Therefore, a delay and process complexity of communication are reduced, thereby facilitating improving communication transmission efficiency.

As shown in FIG. 6, an inventory processing method according to an embodiment of this application includes the following steps.

Step 601: A second device sends a first command, where the first command is used for inventory and obtaining code information of a target device.

In this way, the second device sends the first command, so that after receiving the first command, the first device can determine, according to the first command, whether to feed back code information of the first device, that is, whether the first device is the target device, to ensure that only the target device corresponding to the first command feeds back the code information, thereby avoiding that a plurality of first devices feeds back code information at the same time, reducing a delay and process complexity of communication, and facilitating improving communication transmission efficiency.

Optionally, the first command includes at least one of the following:

identity information of the target device; and
inventory-related indication information.

Optionally, after the second device sends the first command, the method further includes:
the second device receives the code information fed back by the target device.

Herein, the target device may be a first device corresponding to the identity information indicated by the first command, or may be a first device whose slot counter has a value equal to a first value when the first command does not indicate the identity information of the device.

Optionally, before the second device sends the first command, the method further includes:
the second device sends a second command, where the second command indicates an inventory mode.

Optionally, the method further includes:
in a case that the second device fails to receive the code information of the target device, the second device sends at least one of the following:

a second command, where the second command indicates an inventory mode and the indicated inventory mode is a four-step inventory mode; and
a third command, where the third command is a select command or a query command.

Optionally, the method further includes:
the second device sends a continuous wave within a specific time interval since sending the first command.

It is worthwhile to note that, the method in this embodiment cooperates with the method performed by the foregoing first device for implementation, implementations in the foregoing method embodiments are applicable to the method, and a same technical effect can also be achieved.

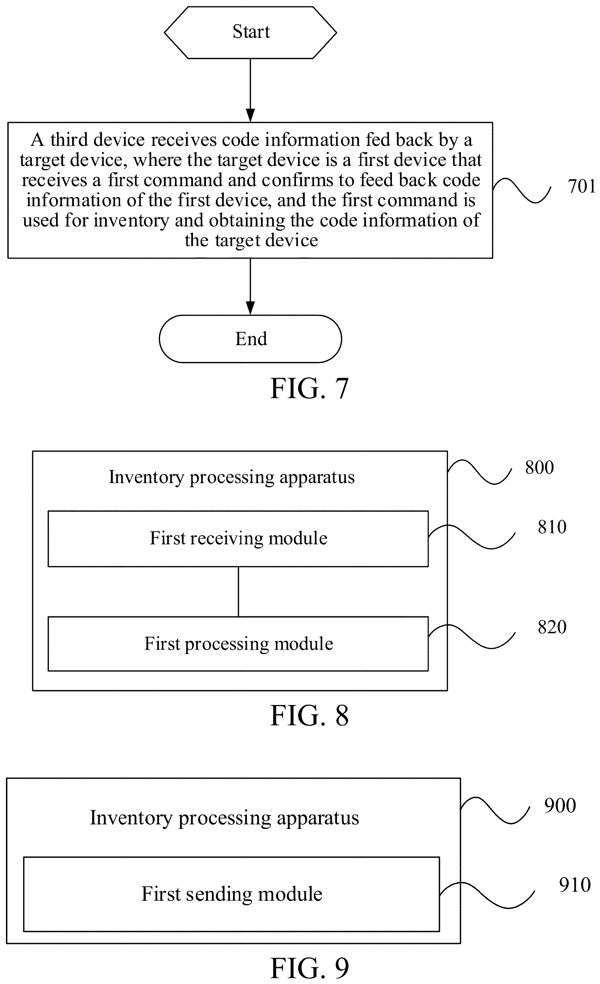

As shown in FIG. 7, an inventory processing method according to an embodiment of this application includes the following steps.

Step 701: A third device receives code information fed back by a target device, where the target device is a first device that receives a first command and confirms to feed back code information of the first device, and the first command is used for inventory and obtaining the code information of the target device.

In other words, as a relay of communication between the first device and the second device, the third device may receive the code information fed back by the target device, to notify the second device of the code information, where the target device is the first device that receives the first command and confirms to feed back the code information of the first device.

Optionally, before the third device receives the code information fed back by the target device, the method further includes:

the third device receives the first command sent by a second device; and
the third device sends the first command to the first device.

In this way, the third device notifies the first device of the first command, so that the first device determines, according to the first command, whether to feed back the code information of the first device, that is, whether the first device is the target device, to ensure that only the target device corresponding to the first command feeds back the code information.

Optionally, after the third device receives the code information fed back by the target device, the method further includes:
the third device sends the code information to the second device.

Optionally, the first command includes at least one of the following:

identity information of the target device; and
inventory-related indication information.

Optionally, the method further includes:

the third device receives at least one of a second command and a third command sent by the second device; and
the third device sends at least one of the second command and the third command to the first device.

The second command indicates an inventory mode, and the third command is a select command or a query command.

It is worthwhile to note that, the method in this embodiment cooperates with the method performed by the foregoing first device for implementation, implementations in the foregoing method embodiments are applicable to the method, and a same technical effect can also be achieved.

An execution entity of the inventory processing method provided in embodiments of this application may be an inventory processing apparatus. In embodiments of this application, the inventory processing apparatus provided in embodiments of this application is described by using an example in which the inventory processing apparatus performs the inventory processing method.

As shown in FIG. 8, an inventory processing apparatus 800 according to an embodiment of this application includes:

a first receiving module 810, used for receiving a first command, where the first command is used for inventory and obtaining code information of a target device; and
a first processing module 820, used for determining, based on the first command, whether to feed back code information of the inventory processing apparatus.

Optionally, the first command indicates at least one of the following:

identity information of the target device; and
inventory-related indication information.

Optionally, the apparatus further includes:
a third receiving module, used for receiving a second command, where the second command indicates an inventory mode.
The inventory mode includes a two-step inventory mode and a four-step inventory mode.
Optionally, the first receiving module is further used for:
receiving the first command in a case that the second command indicates that the inventory mode is the two-step inventory mode.
Optionally, the first processing module includes:

a determining submodule, used for determining, in a case that the first command includes the identity information of the target device, whether identity information of the first device matches the identity information of the target device; and
a first feedback submodule, used for feeding back the code information of the inventory processing apparatus in a case that the identity information of the first device matches the identity information of the target device.

Optionally, the determining submodule is further used for:
ignoring the inventory-related indication information, and determining whether the identity information of the first device matches the identity information of the target device.
Optionally, the apparatus further includes:
a second processing module, where in a case that the identity information of the first device does not match the identity information of the target device, at least one of the following is performed:

the first device does not feed back the code information of the first device;
a slot counter of the first device is not decreased; and
the slot counter of the first device is reset.

Optionally, the first device maintains a current state or changes to an arbitrate state in the case that the identity information of the first device does not match the identity information of the target device.
Optionally, the first processing module includes:
a second feedback submodule, used for feeding back the code information of the inventory processing apparatus in a case that the first command does not include the identity information of the target device and a slot counter of the first device is equal to a first value.
Optionally, the apparatus further includes:
a third processing module, used for switching to an acknowledged state.
Optionally, the first processing module is further used for:
feeding back the code information of the first device based on reception of a continuous wave.
In this embodiment, the first command is used for both inventory and obtaining the code information of the target device. Therefore, after receiving the first command, the apparatus can determine, according to the first command, whether the apparatus is the target device, to determine whether to feed back the code information of the apparatus. In this way, based on the first command, a backscatter device is inventoried and the code information of the target device is obtained, to simplify a delay and complexity of an inventory process. This helps improve communication transmission efficiency.
The inventory processing apparatus provided in this embodiment of this application can implement each process implemented in the method embodiment in FIG. 3, and the same technical effects can be achieved. To avoid repetition, details are not described herein again.

As shown in FIG. 9, an inventory processing apparatus 900 according to an embodiment of this application includes:

a first sending module 910, used for sending a first command, where the first command is used for inventory and obtaining code information of a target device.

Optionally, the first command includes at least one of the following:

identity information of the target device; and
inventory-related indication information.

Optionally, the apparatus further includes:
a fourth receiving module, used for receiving the code information fed back by the target device.

Optionally, the target device is a first device whose identity information matches the identity information of the target device, or a first device whose slot counter is equal to a first value in a case that the first command does not include the identity information of the target device.

Optionally, the apparatus further includes:
a second sending module, used for sending a second command, where the second command indicates an inventory mode.

Optionally, the inventory mode includes a two-step inventory mode and a four-step inventory mode.

Optionally, the apparatus further includes:
a third sending module, used for sending, in a case that the second device fails to receive the code information of the target device, at least one of the following:

a second command, where the second command indicates an inventory mode and the indicated inventory mode is a four-step inventory mode; and
a third command, where the third command is a select command or a query command.

Optionally, the apparatus further includes:
a fourth sending module, used for sending a continuous wave within a specific time interval since sending the first command.

Optionally, the specific time interval is a time interval starting when the second device sends the first command and whose duration is equal to a second value. Alternatively, the specific time interval is a time interval starting when the second device sends the first command and ending when the second device receives an end indication (like a terminator or an end sequence).

The inventory processing apparatus in this embodiment of this application may be an electronic device, for example, an electronic device having an operating system, or a component in an electronic device, for example, an integrated circuit or a chip. The electronic device may be a terminal, or may be a device other than a terminal. For example, the terminal may include but is not limited to the foregoing listed types of the terminal 11, and the another device may be a server, a network attached storage (Network Attached Storage, NAS), or the like. This is not specifically limited in embodiments of this application.

The inventory processing apparatus provided in this embodiment of this application can implement each process implemented in the method embodiment in FIG. 6, and the same technical effects can be achieved. To avoid repetition, details are not described herein again.

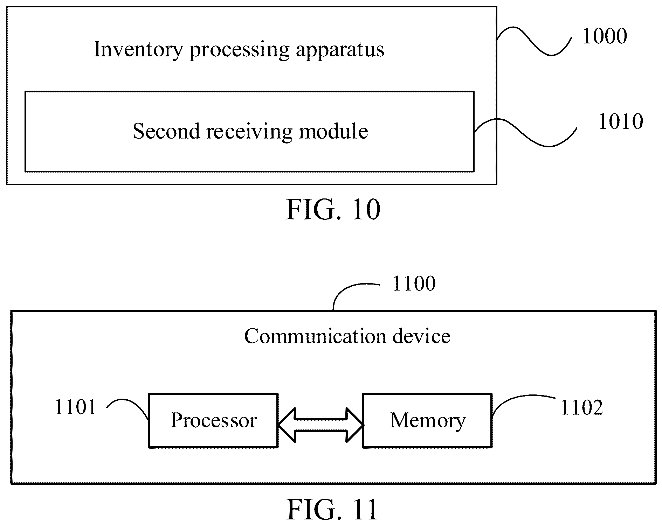

As shown in FIG. 10, an inventory processing apparatus 1000 according to an embodiment of this application includes:

a second receiving module 1010, used for receiving code information fed back by a target device, where the target device is a first device that receives a first command and confirms to feed back code information of the first device, and the first command is used for inventory and obtaining the code information of the target device.

Optionally, the target device is a first device whose identity information matches the identity information of the target device, or a first device whose slot counter is equal to a first value in a case that the first command does not include the identity information of the target device.

Optionally, the apparatus further includes:

a fifth receiving module, used for: receiving the first command sent by a second device; and
sending the first command to the first device.

Optionally, the apparatus further includes:

a fifth sending module, used for sending the code information to the second device.

Optionally, the first command includes at least one of the following:

identity information of the target device; and
inventory-related indication information.

Optionally, the apparatus further includes:

a sixth receiving module, used for receiving at least one of a second command and a third command sent by the second device; and
a sixth sending module, used for sending at least one of the second command and the third command to the first device.

The second command indicates an inventory mode, and the third command is a select command or a query command.

The inventory processing apparatus in this embodiment of this application may be an electronic device, for example, an electronic device having an operating system, or a component in an electronic device, for example, an integrated circuit or a chip. The electronic device may be a terminal, or may be a device other than a terminal. For example, the terminal may include but is not limited to the foregoing listed types of the terminal 11, and the another device may be a server, a network attached storage (Network Attached Storage, NAS), or the like. This is not specifically limited in embodiments of this application.

The inventory processing apparatus provided in this embodiment of this application can implement each process implemented in the method embodiment in FIG. 7, and the same technical effects can be achieved. To avoid repetition, details are not described herein again.

Optionally, as shown in FIG. 11, an embodiment of this application further provides a communication device 1100, including a processor 1101 and a memory 1102. The memory 1102 stores a program or instructions runnable on the processor 1101. For example, in a case that the communication device 1100 is the first device, when the program or the instructions are executed by the processor 1101, the steps in the foregoing method embodiments performed by the first device are implemented, and a same technical effect can be achieved. In a case that the communication device 1100 is the second device, when the program or the instructions are executed by the processor 1101, the steps in the method embodiments performed by the second device are implemented, and a same technical effect can be achieved. To avoid repetition, details are not described herein again. In a case that the communication device 1100 is the third device, when the program or the instructions are executed by the processor 1101, the steps in the method embodiments performed by the third device are implemented, and a same technical effect can be achieved. To avoid repetition, details are not described herein again.

An embodiment of this application further provides a first device, including a processor and a communication interface. The communication interface is used for receiving a first command, where the first command is used for inventory and obtaining code information of a target device. The processor is used for determining, based on the first command, whether to feed back code information of the communication device. This first-device embodiment corresponds to the foregoing method embodiments on the first-device side. Each implementation process and implementation of the foregoing method embodiments may be applied to this terminal embodiment, and the same technical effects can be achieved.

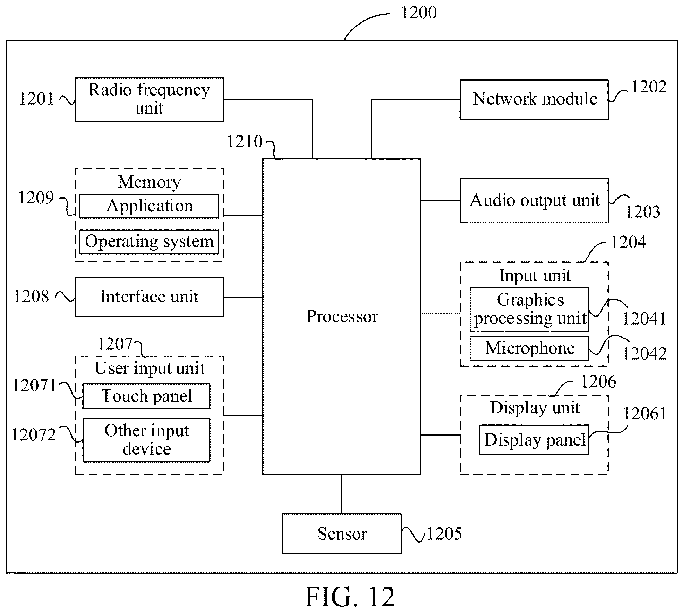

An embodiment of this application further provides a second device, including a processor and a communication interface. The communication interface is used for sending a first command, where the first command is used for inventory and obtaining code information of a target device. This second-device embodiment corresponds to the foregoing method embodiments on the second-device side. Each implementation process and implementation of the foregoing method embodiments may be applied to this terminal embodiment, and the same technical effects can be achieved. Specifically, FIG. 12 is a diagram of a hardware structure of a terminal used as a second device according to an embodiment of this application.

The terminal 1200 includes but is not limited to: at least some components in a radio frequency unit 1201, a network module 1202, an audio output unit 1203, an input unit 1204, a sensor 1205, a display unit 1206, a user input unit 1207, an interface unit 1208, a memory 1209, and a processor 1210.

A person skilled in the art may understand that the terminal 1200 may further include a power supply (for example, a battery) that supplies power to each component. The power supply may be logically connected to the processor 1210 through a power management system, so that functions such as charging management, discharging management, and power consumption management are implemented through the power management system. The terminal structure shown in FIG. 12 does not constitute a limitation on the terminal. The terminal may include more or fewer components than those shown in the figure, or some components may be combined, or different component arrangements may be used.

Details are not described herein again.

It should be understood that in this embodiment of this application, the input unit 1204 may include a graphics processing unit (Graphics Processing Unit, GPU) 12041 and a microphone 12042, and the graphics processing unit 12041 processes a static picture or video image data obtained by an image capturing apparatus (for example, a camera) in a video capturing mode or an image capturing mode. The display unit 1206 may include a display panel 12061, and the display panel 12061 may be configured in a form of a liquid crystal display, an organic light-emitting diode, or the like. The user input unit 1207 includes at least one of a touch panel 12071 and another input device 12072. The touch panel 12071 is also referred to as a touchscreen. The touch panel 12071 may include two parts: a touch detection apparatus and a touch controller. The another input device 12072 may include but is not limited to a physical keyboard, a function key (such as a volume control key or a switch key), a track ball, a mouse, and a joystick. Details are not described herein again.

In this embodiment of this application, after receiving downlink data from a network-side device, the radio frequency unit 1201 may transmit the downlink data to the processor 1210 for processing. In addition, the radio frequency unit 1201 may send uplink data to the network-side device. Generally, the radio frequency unit 1201 includes but is not limited to an antenna, an amplifier, a transceiver, a coupler, a low noise amplifier, a duplexer, and the like.

The memory 1209 may be configured to store a software program or instructions and various data. The memory 1209 may mainly include a first storage area that stores a program or instructions and a second storage area that stores data, where the first storage area may store an operating system, an application or an instruction required for at least one function (for example, a sound playing function, an image display function, and the like), and the like. In addition, the memory 1209 may include a volatile memory or a non-volatile memory, or the memory 1209 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 1209 in this embodiment of this application includes but is not limited to these memories and any other memory of a suitable type.

The processor 1210 may include one or more processing units. Optionally, the processor 1210 may integrate an application processor and a modem processor. The application processor mainly processes operations of an operating system, a user interface, an application, and the like, and the modem processor like a baseband processor mainly processes a wireless communication signal. It may be understood that the modem processor may not be integrated into the processor 1210.

The radio frequency unit 1201 is used for receiving a first command, where the first command is used for inventory and obtaining code information of a target device.

The processor 1210 is used for determining, based on the first command, whether to feed back code information of the communication device.

Optionally, the first command indicates at least one of the following:

identity information of the target device; and
inventory-related indication information.

Optionally, the radio frequency unit 1201 is further used for receiving a second command, where the second command indicates an inventory mode.

The inventory mode includes a two-step inventory mode and a four-step inventory mode.

Optionally, the radio frequency unit 1201 is further used for:
receiving the first command in a case that the second command indicates that the inventory mode is the two-step inventory mode.

Optionally, the processor 1210 is further used for determining, in a case that the first command includes the identity information of the target device, whether identity information of the first device matches the identity information of the target device.

The radio frequency unit 1201 is further used for feeding back the code information of the inventory processing apparatus in a case that the identity information of the first device matches the identity information of the target device.

Optionally, the processor 1210 is further used for: ignoring the inventory-related indication information, and determining whether the identity information of the first device matches the identity information of the target device.

Optionally, the processor 1210 is further used for:
in a case that the identity information of the first device does not match the identity information of the target device, at least one of the following is performed:

the first device does not feed back the code information of the first device;
a slot counter of the first device is not decreased; and
the slot counter of the first device is reset.

Optionally, the first device maintains a current state or changes to an arbitrate state in the case that the identity information of the first device does not match the identity information of the target device.

Optionally, the radio frequency unit 1201 is further used for feeding back the code information of the first device in a case that the first command does not include the identity information of the target device and a slot counter of the first device is equal to a first value.

Optionally, the processor 1210 is further used for:

switching to an acknowledged state.

Optionally, the radio frequency unit 1201 is further used for feeding back the code information of the first device based on reception of a continuous wave.

The first command is used for both inventory and obtaining the code information of the target device. Therefore, after receiving the first command, the terminal can determine, according to the first command, whether the terminal is the target device, to determine whether to feed back the code information of the terminal. In this way, based on the first command, a backscatter device is inventoried and the code information of the target device is obtained, to simplify a delay and complexity of an inventory process. This helps improve communication transmission efficiency.

An embodiment of this application further provides a third device, including a processor and a communication interface. The communication interface is used for receiving code information fed back by a target device, where the target device is a first device that receives a first command and confirms to feed back code information of the first device, and the first command is used for inventory and obtaining the code information of the target device. This third-device embodiment corresponds to the foregoing method embodiments on the third-device side. Each implementation process and implementation of the foregoing method embodiments may be applied to this terminal embodiment, and the same technical effects can be achieved. Specifically, FIG. 12 is a diagram of a hardware structure of a terminal used as a third device according to an embodiment of this application. The structure of the terminal is shown above, and details are not described herein again.

The radio frequency unit 1201 is used for receiving code information fed back by a target device, where the target device is a first device that receives a first command and confirms to feed back code information of the first device, and the first command is used for inventory and obtaining the code information of the target device.

Optionally, the radio frequency unit 1201 is further used for: receiving the first command sent by a second device; and sending the first command to the first device.

Optionally, the radio frequency unit 1201 is further used for sending the code information to the second device.

Optionally, the first command includes at least one of the following:

identity information of the target device; and
inventory-related indication information.

Optionally, the radio frequency unit 1201 is further used for:

receiving at least one of a second command and a third command sent by the second device; and

sending at least one of the second command and the third command to the first device.

The second command indicates an inventory mode, and the third command is a select command or a query command.

An embodiment of this application further provides a network-side device. The network-side device embodiment corresponds to the foregoing method embodiments of the second device or the third device, and each implementation process and implementation of the foregoing method embodiments may be applied to this network-side device embodiment, and the same technical effects can be achieved.

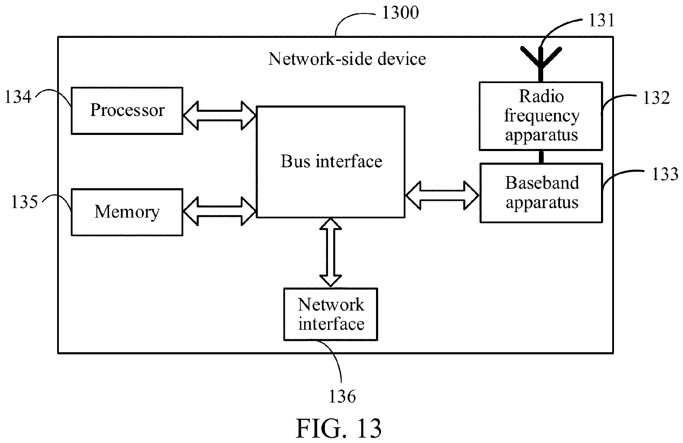

Specifically, an embodiment of this application further provides a network-side device. As shown in FIG. 13, the network-side device 1300 includes: an antenna 131, a radio frequency apparatus 132, a baseband apparatus 133, a processor 134, and a memory 135. The antenna 131 is connected to the radio frequency apparatus 132. In an uplink direction, the radio frequency apparatus 132 receives information through the antenna 131, and sends the received information to the baseband apparatus 133 for processing. In a downlink direction, the baseband apparatus 133 processes to-be-transmitted information, and transmits the information to the radio frequency apparatus 132; and the radio frequency apparatus 132 processes the received information and then transmits the information through the antenna 131.

The method performed by the network-side device in the foregoing embodiments may be implemented in the baseband apparatus 133. The baseband apparatus 133 includes a baseband processor.

The baseband apparatus 133 may, for example, include at least one baseband panel. A plurality of chips are arranged on the baseband panel. As shown in FIG. 13, one of the chips is, for example, the baseband processor, and is connected to the memory 135 through a bus interface, to call a program in the memory 135, so as to perform the operations performed by the network-side device shown in the foregoing method embodiments.

The network-side device may further include a network interface 136. The interface is, for example, a common public radio interface (common public radio interface, CPRI).

Specifically, the network-side device 1300 in this embodiment of this application further includes: instructions or programs stored in a memory 135 and runnable on the processor 134. The processor 134 calls the instructions or programs in the memory 135 to execute the method perform by the modules in FIG. 9 or FIG. 10, and achieves the same technical effects. To avoid repetition, details are not described herein.

An embodiment of this application further provides a readable storage medium. The readable storage medium stores a program or instructions, and when the program or the instructions are executed by a processor, the processes in embodiments of the inventory processing method performed by the first device, or the inventory processing method performed by the second device, or the inventory processing method performed by the third device are implemented. In addition, the same technical effects can be achieved. To avoid repetition, details are not described herein again.

The processor may be a processor of the terminal in the foregoing embodiments. The readable storage medium includes a computer-readable storage medium, for example, a computer read-only memory ROM, a random access memory RAM, a magnetic disk, or an optical disk.

An embodiment of this application further provides a chip. The chip includes a processor and a communication interface, the communication interface is coupled to the processor, and the processor is used for running a program or instructions, to implement the processes in embodiments of the inventory processing method performed by the first device, or the inventory processing method performed by the second device, or the inventory processing method performed by the third device. In addition, the same technical effects can be achieved. To avoid repetition, details are not described herein again.

It should be understood that the chip mentioned in this embodiment of this application may alternatively be referred to as a system on chip, a system chip, a chip system, a system on a chip, or the like.

An embodiment of this application further provides a computer program/program product. The computer program/program product is stored in a storage medium, and the computer program/program product is executed by at least one processor, to implement the processes in embodiments of the inventory processing method performed by the first device, or the inventory processing method performed by the second device, or the inventory processing method performed by the third device. In addition, the same technical effects can be achieved. To avoid repetition, details are not described herein again.

An embodiment of this application further provides an inventory processing system, including: a first device, a second device, and a third device, where the first device may be used for performing the steps of the inventory processing method performed by the first device, the second device may be used for performing the steps of the inventory processing method performed by the second device, and the third device may be used for performing the steps of the inventory processing method performed by the third device.

It is worthwhile to note that, in this specification, the terms "include", "comprise", or any other variants thereof are intended to cover a non-exclusive inclusion, so that a process, a method, a thing, or an apparatus that includes a list of elements not only includes those elements but also includes other elements which are not expressly listed, or further includes elements inherent to such a process, method, thing, or apparatus. An element limited by a phrase "includes a..." does not, without more limitations, preclude existence of an additional identical element in a process, method, object, or apparatus that includes the element. Moreover, it should be noted that the scope of the method and apparatus of embodiments of this application is not limited to performing functions in the order shown or discussed, but may further include performing functions in a substantially concurrent manner or in reverse order depending on the related function. For example, the described method may be performed in an order different from that described, and various steps may be further added, omitted, or combined. Moreover, features described with reference to some examples may be combined in other examples.

According to the descriptions in the foregoing implementations, a person skilled in the art may clearly learn that the method according to the foregoing embodiments may be implemented by software and a necessary general hardware platform, or certainly, by using hardware. However, in most cases, the former is a better implementation. Based on such an understanding, the technical solutions of this application essentially or the part contributing to the conventional technology may be implemented in a form of a computer software product. The computer software product is stored in a storage medium (such as an ROM/RAM, a magnetic disk, and an optical disk) and includes several instructions configured to enable a terminal (which may be a mobile phone, a computer, a server, an air conditioner, a network device, or the like) to execute the method according to embodiments of this application.

The foregoing describes embodiments of this application with reference to the accompanying drawings. However, this application is not limited to the foregoing specific implementations. The foregoing specific implementations are merely examples, but are not limitative. Inspired by this application, persons of ordinary skill in the art may further make modifications without departing from the purposes of this application and the protection scope of the claims, and all the modifications shall fall within the protection of this application.

**Claims**

1. An inventory processing method, comprising:

   receiving, by a first device, a first command, wherein the first command is used for inventory and obtaining code information of a target device; and
   determining, by the first device according to the first command, whether to feed back code information of the first device.

2. The method according to claim 1, wherein the first command indicates at least one of the following:

   identity information of the target device; and
   inventory-related indication information.

3. The method according to claim 1, wherein before the receiving, by a first device, a first command, the method further comprises:

   receiving, by the first device, a second command, wherein the second command indicates an inventory mode, wherein
   the inventory mode comprises a two-step inventory mode and a four-step inventory mode.

4. The method according to claim 3, wherein the receiving, by a first device, a first command comprises:
   receiving, by the first device, the first command in a case that the second command indicates that the inventory mode is the two-step inventory mode.

5. The method according to claim 2, wherein the determining, by the first device according to the first command, whether to feed back code information of the first device comprises:

   determining, by the first device in a case that the first command comprises the identity information of the target device, whether identity information of the first device matches the identity information of the target device; and
   feeding back, by the first device, the code information of the first device in a case that the identity information of the first device matches the identity information of the target device.

6. The method according to claim 5, wherein the determining, by the first device in a case that the first command comprises the identity information of the target device, whether identity information of the first device matches the identity information of the target device comprises:
   ignoring, by the first device, the inventory-related indication information, and determining whether the identity information of the first device matches the identity information of the target device.

7. The method according to claim 5, wherein the method further comprises:
   in a case that the identity information of the first device does not match the identity information of the target device, at least one of the following is performed:

   the first device does not feed back the code information of the first device;
   a slot counter of the first device is not decreased; and
   the slot counter of the first device is reset.

8. The method according to claim 7, wherein the first device maintains a current state or changes to an arbitrate state in the case that the identity information of the first device does not match the identity information of the target device.

9. The method according to claim 1, wherein the determining, by the first device according to the first command, whether to feed back code information of the first device comprises:
feeding back, by the first device, the code information of the first device in a case that the first command does not comprise the identity information of the target device and a slot counter of the first device is equal to a first value.

10. The method according to claim 5 or 9, wherein the method further comprises:
switching, by the first device, to an acknowledged state.

11. The method according to claim 5 or 9, wherein the feeding back, by the first device, the code information of the first device comprises:
feeding back, by the first device, the code information of the first device based on reception of a continuous wave.

12. An inventory processing method, comprising:
sending, by a second device, a first command, wherein the first command is used for inventory and obtaining code information of a target device.

13. The method according to claim 12, wherein the first command comprises at least one of the following:

   identity information of the target device; and
   inventory-related indication information.

14. The method according to claim 12, wherein after the sending, by a second device, a first command, the method further comprises:
receiving, by the second device, the code information fed back by the target device.

15. The method according to claim 12 or 14, wherein before the sending, by a second device, a first command, the method further comprises:
sending, by the second device, a second command, wherein the second command indicates an inventory mode.

16. The method according to claim 12, wherein the method further comprises:
in a case that the second device fails to receive the code information of the target device, sending, by the second device, at least one of the following:

   a second command, wherein the second command indicates an inventory mode and the indicated inventory mode is a four-step inventory mode; and
   a third command, wherein the third command is a select command or a query command.

17. The method according to claim 12, wherein the method further comprises:
sending, by the second device, a continuous wave within a specific time interval since sending the first command.

18. An inventory processing method, comprising:
receiving, by a third device, code information fed back by a target device, wherein the target device is a first device that receives a first command and confirms to feed back code information of the first device, and the first command is used for inventory and obtaining the code information of the target device.

19. The method according to claim 18, wherein before the receiving, by a third device, code information fed back by a target device, the method further comprises:

   receiving, by the third device, the first command sent by a second device; and
   sending, by the third device, the first command to the first device.

20. The method according to claim 18, wherein after the receiving, by a third device, code information fed back by a target device, the method further comprises:
sending, by the third device, the code information to the second device.

21. The method according to claim 18, wherein the first command comprises at least one of the following:

identity information of the target device; and
inventory-related indication information.

22. The method according to any one of claims 18 to 21, wherein the method further comprises:

receiving, by the third device, at least one of a second command and a third command sent by the second device; and
sending, by the third device, at least one of the second command and the third command to the first device, wherein
the second command indicates an inventory mode, and the third command is a select command or a query command.

23. An inventory processing apparatus, comprising:

a first receiving module, used for receiving a first command, wherein the first command is used for inventory and obtaining code information of a target device; and
a first processing module, used for determining, based on the first command, whether to feed back code information of the inventory processing apparatus.

24. An inventory processing apparatus, comprising:
a first sending module, used for sending a first command, wherein the first command is used for inventory and obtaining code information of a target device.

25. An inventory processing apparatus, comprising:
a second receiving module, used for receiving code information fed back by a target device, wherein the target device is a first device that receives a first command and confirms to feed back code information of the first device, and the first command is used for inventory and obtaining the code information of the target device.

26. A communication device, comprising a processor and a memory, wherein the memory stores a program or instructions runnable on the processor, and when the program or the instructions are executed by the processor, steps of the inventory processing method according to any one of claims 1 to 11, or the inventory processing method according to any one of claims 12 to 17, or the inventory processing method according to any one of claims 18 to 22 are performed.

27. A readable storage medium, wherein the readable storage medium stores a program or instructions, and when the program or the instructions are executed by a processor, steps of the inventory processing method according to any one of claims 1 to 11, or the inventory processing method according to any one of claims 12 to 17, or the inventory processing method according to any one of claims 18 to 22 are performed.

Network-side
device

Terminal

Terminal

FIG. 1

gNB                                    Tag (Tag)

Query

CW

RN16

ACK

CW

PC/EPC

FIG. 2

Start

A first device receives a first command, where the first command is used for inventory and obtaining code information of a target device 301

The first device determines, according to the first command, whether to feed back code information of the first device 302

End

FIG. 3

FIG. 4

gNB             Tag (Tag)

Selection stage     Select (Select) or challenge (Challenge)

Query, in two steps, code information of a Tag whose identity information is matched

Inventory stage

A first command (Query+ACK) carries RN16

CW

PC/EPC1

Query, in two steps, code information of a Tag whose slot counter is equal to a first value

A first command (Query+ACK) does not carry RN16

CW

PC/EPC1

Access stage     Access one or more Tags

FIG. 5

Start

A second device sends a first command, where the first command is used for inventory and obtaining code information of a target device    601

End

FIG. 6

Start

A third device receives code information fed back by a target device, where the target device is a first device that receives a first command and confirms to feed back code information of the first device, and the first command is used for inventory and obtaining the code information of the target device 〜 701

End

FIG. 7

Inventory processing apparatus 〜 800

First receiving module 〜 810

First processing module 〜 820

FIG. 8

Inventory processing apparatus 〜 900

First sending module 〜 910

FIG. 9

Inventory processing apparatus — 1000

Second receiving module — 1010

FIG. 10

— 1100

Communication device

1101 — Processor ⟷ Memory — 1102

FIG. 11

1200

| | |
|---|---|
| 1201 — Radio frequency unit | Network module — 1202 |
| | 1210 |
| 1209 — Memory<br>Application<br>Operating system | Audio output unit — 1203 |
| | 1204 |
| 1208 — Interface unit | Processor — Input unit<br>Graphics processing unit — 12041<br>Microphone — 12042 |
| 1207 — User input unit<br>12071 — Touch panel<br>12072 — Other input device | 1206<br>Display unit — 12061<br>Display panel |

Sensor — 1205

FIG. 12

1300

131

Network-side device

134

Processor

132

Radio
frequency
apparatus

Bus interface

135

Memory

133

Baseband
apparatus

Network
interface

136

FIG. 13

## INTERNATIONAL SEARCH REPORT

| | International application No. |
|---|---|
| | **PCT/CN2024/070032** |

| A. | CLASSIFICATION OF SUBJECT MATTER |
|---|---|

G06K17/00(2006.01)i

According to International Patent Classification (IPC) or to both national classification and IPC

| B. | FIELDS SEARCHED |
|---|---|

Minimum documentation searched (classification system followed by classification symbols)

IPC:G06K

Documentation searched other than minimum documentation to the extent that such documents are included in the fields searched

Electronic data base consulted during the international search (name of data base and, where practicable, search terms used)

CNABS; CNTXT; DWPI; SIPOABS; USTXT; CNKI; IEEE; 射频识别, 标签, 命令, 信令, 查询, 盘点, 盘存, 确认, 应答, 随机数, 身份, 产品, 商品, 编码, 代码, 协议控制, rfid, tag, command, signalling, query, inventory, acknowledge, random number, identity, product, code, protocol control

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 114841180 A (SHANGHAI HUAWEI TECHNOLOGIES CO., LTD.) 02 August 2022 (2022-08-02) <br> description, paragraphs 52-124 | 1-27 |
| A | CN 114091490 A (SHENZHEN CHAINWAY INFORMATION TECHNOLOGY CO., LTD.) 25 February 2022 (2022-02-25) <br> entire document | 1-27 |
| A | CN 114970581 A (TSINGHUA UNIVERSITY) 30 August 2022 (2022-08-30) <br> entire document | 1-27 |
| A | JP 2009113893 A (TOSHIBA TEC K. K.) 28 May 2009 (2009-05-28) <br> entire document | 1-27 |
| A | JP 2017210310 A (NIPPON TELEGRAPH & TELEPHONE CORP.) 30 November 2017 (2017-11-30) <br> entire document | 1-27 |

☐ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **06 March 2024** | **22 March 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/070032**

| Patent document cited in search report | | | Publication date (day/month/year) | Patent family member(s) | | | Publication date (day/month/year) |
|---|---|---|---|---|---|---|---|
| CN | 114841180 | A | 02 August 2022 | WO | 2022161336 | A1 | 04 August 2022 |
| | | | | EP | 4276678 | A1 | 15 November 2023 |
| | | | | US | 2023376704 | A1 | 23 November 2023 |
| CN | 114091490 | A | 25 February 2022 | CN | 114091490 | B | 19 April 2022 |
| CN | 114970581 | A | 30 August 2022 | | None | | |
| JP | 2009113893 | A | 28 May 2009 | JP | 5122245 | B2 | 16 January 2013 |
| JP | 2017210310 | A | 30 November 2017 | | None | | |

Form PCT/ISA/210 (patent family annex) (July 2022)

**REFERENCES CITED IN THE DESCRIPTION**

**Patent documents cited in the description**

- CN 202310038244